# EUROPÄISCHE PATENTANMELDUNG

(11) **EP 0 933 293 A2**
(43) Veröffentlichungstag der Anmeldung: **04.08.1999**
(21) Anmeldenummer: 99101964.7
(22) Anmeldetag: 01.02.1999
(51) Int. Cl.: B64C 11/00, G10K 11/175

(54) **Anordnung und Verfahren zur Minderung des Überfluggeräusches von Propellerflugzeugen**

(30) Priorität: 02.02.1998 DE 19803947
(71) Anmelder: Deutsches Zentrum für Luft- und Raumfahrt e.V., 53175 Bonn (DE)
(72) Erfinder: Kallergis, Michael Dipl.-Ing., 38106 Braunschweig (DE)
(74) Vertreter: Einsel, Martin, Dipl.-Phys.

(57) **Zusammenfassung**

Die Erfindung betrifft eine Anordnung zur Minderung des Überfluggeräusches von Flugzeugen mit mit ungleichförmiger Drehgeschwindigkeit angetriebenem Propeller und daraus resultierendem Zusatzschallabstrahlmuster, wobei der Propeller derart auf der Motorwelle angeordnet ist, daß im wesentlichen die Maxima des Zusatzschallabstrahlmusters außerhalb von Drehwinkelbereichen liegen, in denen das regulär nach unten gerichtete Propellerschallsignal auftritt.

Ferner betrifft die Erfindung ein Verfahren zur Minderung des Überfluggeräusches von Flugzeugen mit mit ungleichförmiger Drehgeschwindigkeit angetriebenem Propeller, mit den Schritten: Erfassen der Beschleunigungswerte der Propellerdrehbewegung in Abhängigkeit des Drehwinkels der Propellerwelle, Bestimmung der Propellerdrehwinkelbereiche, in denen Maxima des nach unten gerichteten Propellerschallsignals auftreten, Optimierung des Versatzwinkels, zwischen Propeller und Propellermotorwelle derart, daß die hohen, positiven Beschleunigungswerte außerhalb der bestimmten Propellerdrehwinkelbereiche liegen.

## Beschreibung

Die Erfindung betrifft eine Anordnung und ein Verfahren zur Minderung des Überfluggeräusches von Flugzeugen mit mit ungleichförmiger Drehgeschwindigkeit angetriebenem Propeller und daraus resultierendem Zusatzschallabstrahlmuster.

In der Luftfahrt werden Propellerantriebe für langsamere und/oder kleinere Luftfahrzeuge angewendet. Die zunehmende Zahl von Sport- und Geschäftsreiseflugzeugen erhöht in der Nähe von Flughäfen die Lärmbelästigung. Die Überfluggeräusche werden bei kleineren Propellerflugzeugen insbesondere vom Propeller selbst und im geringeren Maß vom Motorauspuff sowie weiteren Störquellen abgestrahlt; dies gilt insbesondere für die das menschliche Empfinden besonders störenden, für das Gehör maßgeblichen Frequenzen, die auch als "A-bewertete Schallpegel" bezeichnet werden.

Zur Minderung des Überfluggeräusches von derartigen Propellerflugzeugen sind unterschiedliche Maßnahmen bekannt. Beispielsweise ist es aus der DE-OS 20 09105 bekannt, daß das Propellerschallfeld durch Überlagerung mit Schallfeldern von aktiven Anti-Schallgebern vermindert wird. Da das Vorsehen von zusätzlichen Anti-Schallgebern konstruktiv und von der Ansteuerung aufwendig ist, ist in der DE-PS 37 35 421 vorgeschlagen worden, den Propeller derart auf der Motorwelle anzuordnen, daß positive Anteile des Motorschalldrucks auf negative Anteile des Propellerschalldrucks fallen und somit zu einer Lärmreduzierung führen. In weiterer Ausgestaltung ist in der DE 40 26 112 C1 dazu eine genaue geometrische Anordnung des Abgasrohres zur Propellerblattebene angegeben. Nachteilig an dieser Anordnung ist, daß weitere Störsignalquellen nicht berücksichtigt werden und bei variierender Phasenlage des Auspuffsignals keine optimale Schallminderung erreicht werden kann.

Als zusätzliche schallinduzierende Störquelle hat sich die ungleichförmige Drehgeschwindigkeit der von Kolbenmotoren angetriebenen Propeller herausgestellt. Dabei treten an einigen Stellen des Drehkreises Geschwindigkeitsmaxima bzw. -minima auf, die eine erhöhte bzw. verminderte Schallabstrahlung in bestimmte Richtungen zur Folge haben. Die aufgrund der ungleichförmigen Drehbewegung erzeugten Zusatzsignale führen zu einer Erhöhung gerade jener Frequenzen, die in den besonders gut hörbaren Bereichen liegen, was auch bei der Bewertung von Lärmmessungen nach dBA seinen Niederschlag findet. Davon ausgehend ist bereits versucht worden, diesem Problem entgegenzuwirken und durch Drehschwingungsdämpfer eine Vergleichmäßigung der Rotationsgeschwindigkeit des Propellers zu erzielen. Dies führt jedoch zu zusätzlichen Belastungen des Propellers, zu einer Gewichtserhöhung und zu niederfrequenten Schwingungen, die eine erhebliche Beanspruchung des Motorträgers zur Folge haben. Dämpfer dieser Art sind beispielsweise aus der DE-PS 547 862 und der DE-AS 1 080 359 bekannt.

Aufgabe der Erfindung ist es, eine Anordnung und ein Verfahren zur weiteren Minderung des Überfluggeräusches von Propellerflugzeugen anzugeben, die/das mit nur geringem Aufwand realisiert werden kann und das Flugzeug nicht zusätzlich belastet.

Gelöst wird die Aufgabe bei der eingangs genannten Anordnung dadurch, daß der Propeller derart auf der Motorwelle angeordnet ist, daß im wesentlichen die Maxima des Zusatzschallabstrahlmusters außerhalb von Drehwinkelbereichen liegen, in denen Maxima des nach unten gerichteten Propellerschallsignals auftreten.

Ferner wird die Aufgabe verfahrensgemäß gelöst mit den Schritten: Erfassen der Beschleunigungswerte der Propellerdrehbewegung in Abhängigkeit des Drehwinkels des Propellers, Bestimmung der Propellerdrehwinkelbereiche, in denen Maxima des nach unten gerichteten Propellerschallsignals auftreten, Optimierung des Versatzwinkels, zwischen Propeller und Motorwelle derart, daß die hohen, positiven Beschleunigungswerte außerhalb der bestimmten Propellerdrehwinkelbereiche liegen.

Eine ungleichförmige Drehgeschwindigkeit tritt insbesondere bei Kolbenmotorantrieben auf, wobei die Ungleichförmigkeit dann auf den Propeller übertragen wird. Bei mit ungleichförmiger Drehgeschwindigkeit angetriebenen Propellern treten neben dem regulären Propellerschallsignal bei gleichförmiger Drehbewegung zusätzlich instationäre Wechseldrücke an den Propellerblättern auf, die eine zusätzliche Schallabstrahlung ins Fernfeld zur Folge haben. Die Pegel der Harmonischen sind im mittleren Frequenzbereich erhöht, was zu einer weiteren Erhöhung des A-bewerteten Schallpegels führt. Diese Zusatzsignale bilden ein Schallabstrahlmuster mit Maxima und Minima, also eine azimutale Richtcharakteristik. Folglich wird ein erhöhter A-bewerteter Schallpegel in Winkelbereichen der Maxima bzw. ein verringerter Schallpegel in Winkelbereichen der Minima empfangen.

Da die Ungleichförmigkeit im Drehlauf an bestimmten Drehwinkeln der Kurbelwelle orientiert ist, ändert das Zusatzschallabstrahlmuster seine Lage mit der Änderung des Versatzwinkels zwischen Kurbelwelle und Propeller. Somit ist die Schallabstrahlung von der Phasenlage (Versatzwinkel) zwischen Propeller und Kurbelwelle abhängig. Fallen die Propellerblätter und die Ungleichförmigkeitsmaxima der Kurbelwelle zusammen, entsteht eine erhöhte Schallabstrahlung. Sind dagegen die Ungleichförmigkeitsminima und die Blätter gekoppelt, dann tritt eine verminderte Schallabstrahlung auf. Da die Propellerblätter das reguläre, bei gleichförmiger Drehgeschwindigkeit entstehende Schallsignal bei Drehwinkeln von etwa 90° +/- 20° abstrahlen, sollen die Maxima der ungleichförmigen Drehbewegungen außerhalb dieses Drehwinkelbereichs liegen. Damit erhalten die Zusatzsignale, wenn sie denn überhaupt abgestrahlt werden, keine steile Flanken, bewirken also keine Erhöhung des A-bewerteten Schallpegels.

Mit dem erfindungsgemäßen Verfahren können vorhandene und neue Propellerantriebseinheiten durch ein selektives und im weiteren durch gegenphasiges Abstimmen des regulären Propellerschallsignals mit dem durch die ungleichförmige Drehbewegung induzierten Zusatzsignal zur Verringerung der Lärmbelästigung optimiert werden.

In der Praxis wird das Verhalten bei allen Flugzeugen eines bestimmten Musters identisch sein. Das bedeutet, daß bei einem neu entwickelten Flugzeugmuster zunächst das Zusatzabstrahlmuster mit seinen entsprechenden Winkelcharakteristiken durch Messung und/ode aber auch theoretisch durch Berechnung festgestellt wird. Erfindungsgemäß wird nun ermittelt, wie der Versatzwinkel zwischen Propeller und Motorwelle optimal wäre und abhängig davon werden die Durchbohrungen durch die Flansche hergestellt und angeordnet, mit deren Hilfe der Propeller und die Kurbelwelle des Antriebsmotors verbunden sind.
Im Gegensatz zur heutigen Praxis würde durch Markierungen, Splinte, Keilnuten oder ähnliches Vorsorge dafür getroffen, daß eine andere Montierung der Propeller (etwa um 180° versetzt) nicht mehr möglich ist bzw. zumindest die bevorzugte Montierung ersichtlich ist.
Bei bereits auf dem Markt befindlichen Flugzeugen wird es wirtschaftlich nicht vertretbar sein, die vorhandenen Flansche mit zusätzlichen Bohrungen zu versehen, auch wenn von den im Regelfall mehreren 1.000 Exemplaren eines Flugzeugtyps nur eines präzise vermessen werden müßte. Es wäre aber möglich, abhängig von der optimierten Versatzwinkelstellung einen entsprechenden Zwischenflansch jeweils anzubieten und zu montieren, wenn ohnehin eine regelmäßige Wartung ansteht.

Nachfolgend werden zwei Ausführungsbeispiele der Erfindung anhand der beiliegenden Zeichnungen detailiert beschrieben.

Darin zeigt:
- **Figur 1**: einen Graphen der Drehgeschwindigkeitsänderung in Abhängigkeit der Rotationen,
- **Figur 2**: die Definition des Emissionswinkels eines Propellerblattes,
- **Figur 3**: zu einem ersten Versuchsaufbau den gemessenen Schalldruck-Zeitverlauf bei nicht optimierter Anordnung,
- **Figur 4**: das zu Fig. 3 zugehörige Spektrum,
- **Figur 5**: einen gemessenen Schalldruck-Zeitverlauf nach optimierter Anordnung,
- **Figur 6**: das zu Fig. 5 gehörende Spektrum,
- **Figur 7**: einen ersten Schalldruck-Zeitverlauf mit einem Versatzwinkel von Δ ψ = 0° bei einem zweiten Versuchsaufbau,
- **Figur 8**: einen zweiten Schalldruck-Zeitverlauf mit einem Versatzwinkel von Δ ψ = - 60° bei diesem zweiten Versuchsaufbau,
- **Figur 9**: einen dritten Schalldruck-Zeitverlauf mit einem Versatzwinkel von Δ ψ = - 120° bei diesem zweiten Versuchsaufbau, und
- **Figur 10**: einen vierten Schalldruck-Zeitverlauf mit einem Versatzwinkel von Δ ψ = -150° bei diesem zweiten Versuchsaufbau.

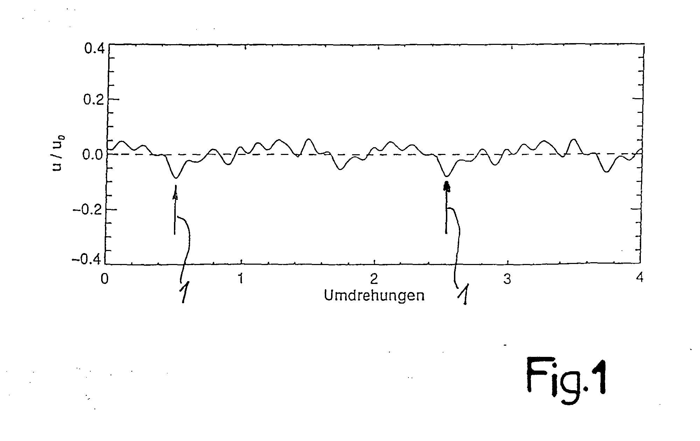

In **Fig. 1** ist beispielhaft der mit der durchschnittlichen Drehgeschwindigkeit normierte Verlauf der momentanen Drehgeschwindigkeit in Abhängigkeit der Umdrehungen eines an einen 4-Zylinder-Kolbenmotor aufmontierten Propellers dargestellt. Pfeil 1 markiert ein Geschwindigkeitsmaximum, das in jeder zweiten Umdrehung in gleicher Phasenlage auftritt. Es ist erkennbar, daß die Ungleichförmigkeit der Drehgeschwindigkeit periodisch ist.

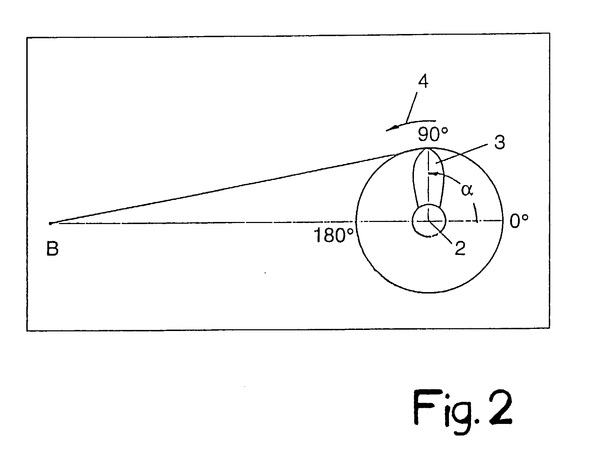

In **Fig. 2** ist die Definition des Emissionswinkels dargestellt. In B ist der Meß- oder Beobachtungsort. Die durch den Beobachtungsort B und die Propellerachse2 gedachte Verbindungslinie definiert den momentanen Drehwinkel α eines Propellerblattes 3 und wird beginnend auf der vom Beobachtungsort B abgewandten Seite gezählt. In Fig. 2 definiert Pfeil 4 die Drehrichtung, hier linksdrehend. Am Beobachungsort B wird im Fernfeld nur die Tätigkeit einer an jeder Propellerblattspitze gedachten Punktquelle wahrgenommen. Aufgrund der Zeitverdichtung wird bei einer auf den Beobachungsort B gerichteten Bewegung, also bei einem Drehwinkel α = 90° eine Verdichtung von Elementarwellen zu Schallwellen und bei α = 270° eine Zeitdehnung (keine Schallemission in Richtung B) wahrgenommen. Folglich erfolgt die Lärmbelastung am Beobachtungsort B nur aus einem kleinen Winkelausschnitt der Drehung des Flugzeugpropellers. Zur Minderung des Überfluggeräusches ist daher bei Lage des Beobachtungsortes am Boden derjenige Bereich, in dem das Propellerblatt 3 genau horizontal steht und sich auf den Boden zubewegt, für den wahrnehmbaren Propellerschall relevant. Durch Versuche wurde festgestellt, daß der wesentliche schallinduzierende Bereich durch den Winkelbereich α = 90° +/- 20° begrenzt werden kann.

Aufgrund der in Fig. 1 dargestellten ungleichförmigen Drehgeschwindigkeit von kolbenmotorgetriebenen Propellem treten zu den bekannten Propellerschallsignalen instationäre Wechseldrücke auf den Blättem auf, die eine zusätzliche Schallabstrahlung ins Fernfeld zur Folge haben. Aufgrund der Periodizität der Drehgeschwindigkeitsänderungen des Propellers hat dieses zusätzliche Schallabstrahlmuster eine azimutale Richtcharakteristik, die also, auch dem Drehwinkel der Kurbelwelle des Antriebsmotors zuzuordnen ist.

Dagegen ist, wie zu Fig. 2 ausgeführt, die Propellerschallabstrahlung an dem Propellerblattdrehwinkel α orientiert.

Folglich muß sich die Phasenlage des Propellerschallsignals zum Zusatzschallsignal bei Veränderung des Versatzwinkels zwischen Propeller und Kurbelwelle ändern. Dies wurde bei Flugversuchen mit der Cessna T207 (EHOY), ausgestattet mit einem Continental 6-Zylinder-Motor und einem McCauley 3-Blatt-Propeller, durch sukzessives Ändern des azimutalen Versatzwinkels zwischen Propeller und Kurbelwelle durchgeführt. Bei den Versuchen wurde ein Bodenmikrophon überflogen.

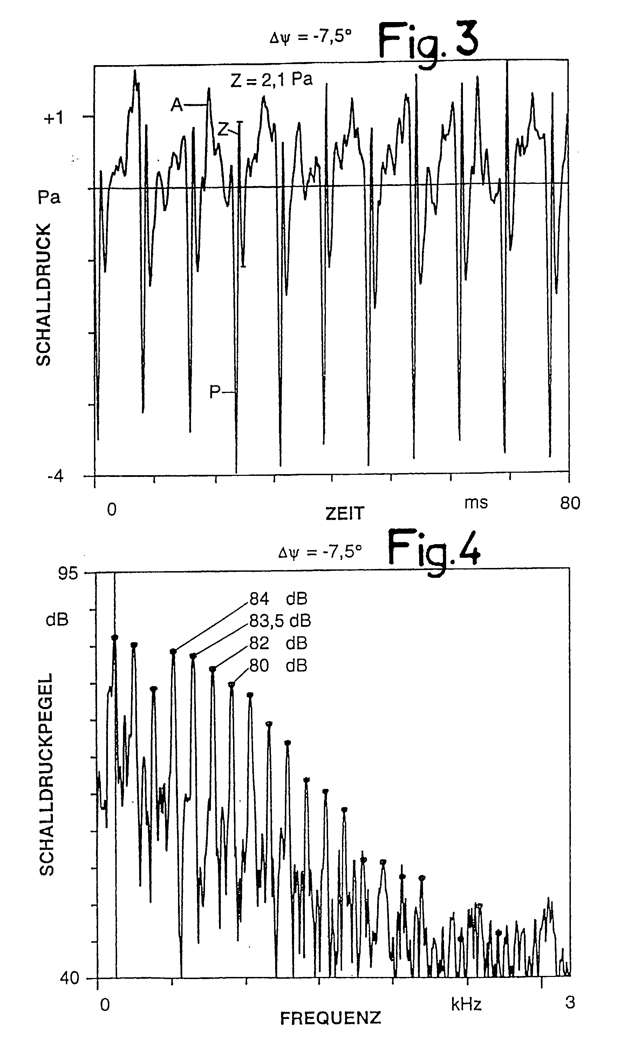

**Fig. 3** zeigt den Zeitverlauf des gemessenen Schalldrucks. An der Meßkurve sind die zugeordneten Schallsignale markiert. A bedeutet Auspuffsignal, P Propellersignal und ZZusatzsignal. Bauartbeding (wegen der Konzeption des Auspuffsystems) änderte sich der Zeit- bzw. Phasenabstand zwischen den Propellersignalen P und Auspuffsignalen A. Das Zusatzsignal Z infolge der ungleichförmigen Drehgeschwindigkeit wurde dagegen in der Nähe des Propellersignals gefunden. Der Abstand zwischen PropellersignalP und ZusatzsignalZ ist für einen jeweiligen Versatzwinkel gleich.

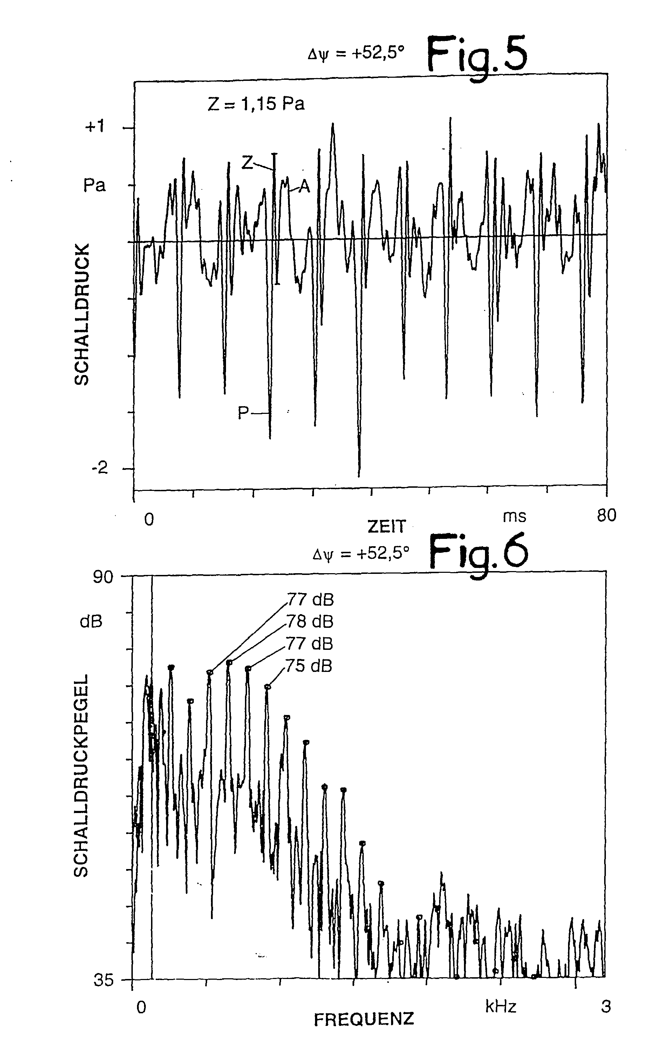

Das entsprechende Schmalbandspektrum mit dem erhöhten mittleren Frequenzbereich ist in **Fig. 4** dargestellt. Bei diesem ersten Versatzwinkel sind die gezeigten Überlagerungen im wesentlichen gleichphasig, was zu relativ hohen Schall pegeln bei den niedrigeren Frequenzen führt.

In **Fig. 5** ist der gemessene Schalldruck-Zeitverlauf nach Änderung des Versatzwinkels zwischen Propeller und Kurbelwelle von -7,5° auf +52,5° bezogen auf die Grundstellung dargestellt. Die entsprechende Signalzuordnung ist ebenfalls mit A, P und Z markiert. Da die gezeigten Überlagerungen nunmehr gegenphasig ausgerichtet sind, sind auch die Gesamtamplituden niedriger. Die Zusatzsignale Z (nicht identisch mit den vorher gezeigten in Fig. 3) erscheinen gemäß der Grundlage des Verfahrens etwa beim gleichen Phasenwinkel zum Propellersignal, weil sie erst dort signifikant werden. Ihre Doppelamplitude beträgt ca. 1,15 Pa gegenüber 2,1 Pa der vorhergezeigten. Dies zeigt auch das in **Fig. 6** dargestellte entsprechende Schmalbandspektrum. So betragen die Einzelpegel im interessierenden Bereich zwischen 500 und 1.000 Hz in der ungünstigen Propellerstellung mit dem Versatzwinkel Δ ψ von -7,5° jeweils 80 bis 84 dB, während sie in der günstigeren Propellerstellung mit einem Versatzwinkel Δ ψ von +52,5° zwischen jeweils 75 und 78 dB betragen.

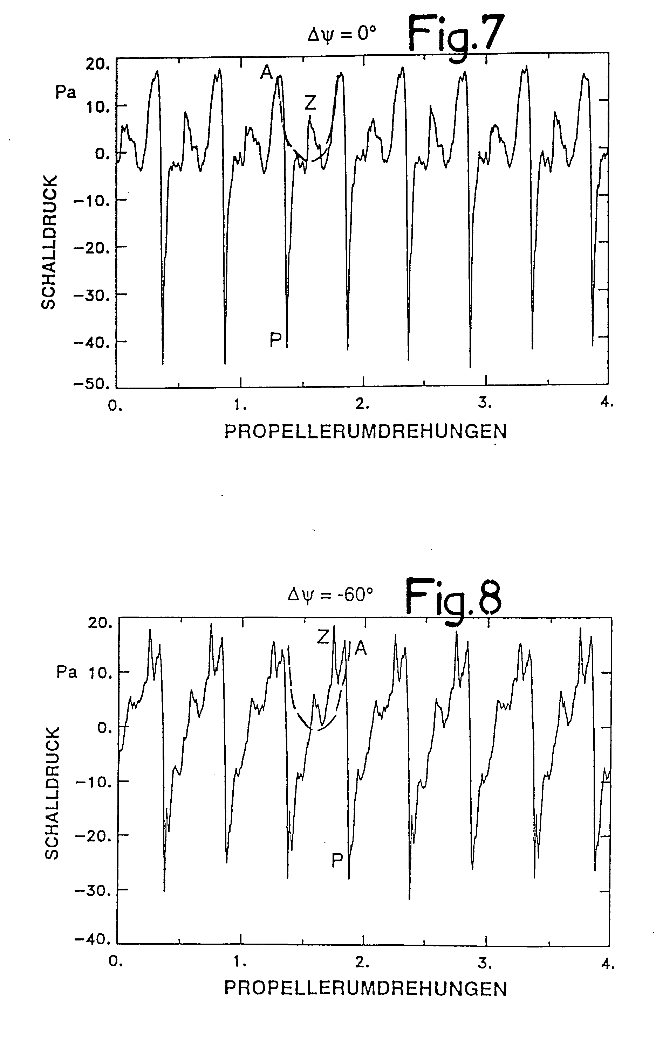

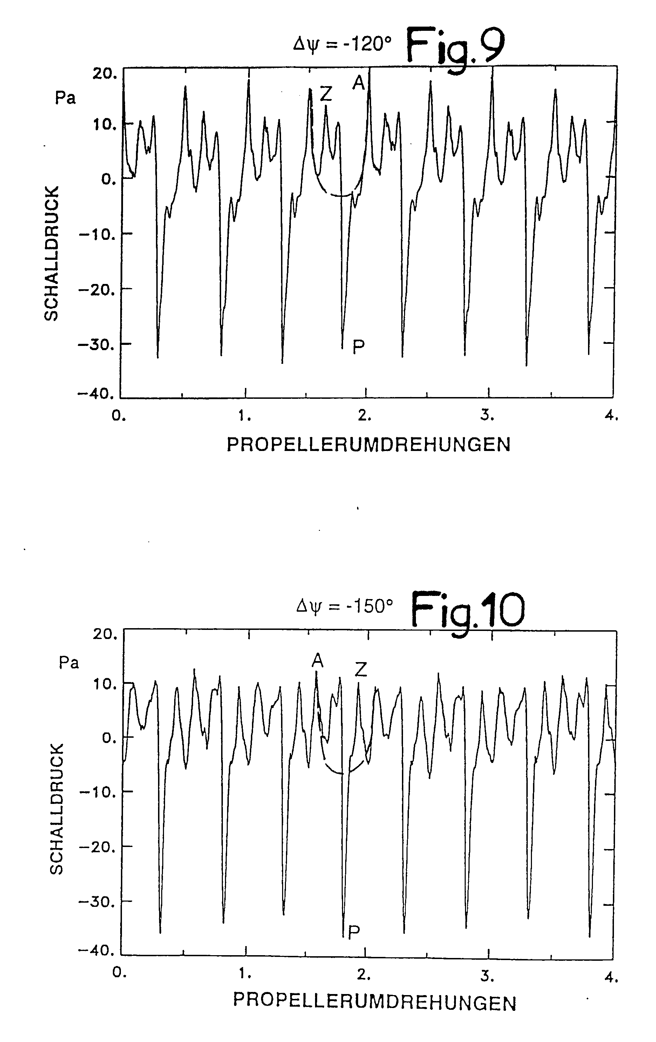

In einem weiteren Versuchsaufbau wurde eine komplette Antriebseinheit aus einem 4-Zylinder-Motor und einem 2-Blatt-Propeller (LFU 205) in einem Windkanal untersucht. Im Gegensatz zum vorgenannten Versuchsaufbau waren die Längen der Abgasrohre von den Auslaßventilen bis zum Auspuffende gleich gewählt, so daß die Spitzen der Abgasschalldrücke zu exakt gleichen Zeiten abgestrahlt wurden. Es wurde hierbei festgestellt, daß sich bei Änderungen des azimutalen Versatzwinkels zwischen Antriebswelle und Propeller die Schallabstrahlung bzw. der Schallpegel in eine bestimmte Richtung ändert, wie die **Fig. 7** bis **Fig. 10** zeigen. Durch die Änderung des Versatzwinkels (Δ ψ =0°,-60,°-120° und -150°) änderte sich die Lage der Schwingungen des Auspuffsignals A in 60°- bzw. 30°-Schritten zu jeweils späteren Zeitpunkten relativ zum Propellersignal P. Das Auspuffsignal überlagerte sich dem Propellersignal somit gleichphasig, Δ ψ = 0°, bzw. gegenphasig, Δ ϕ = -60°. Das Zusatzsignal Z infolge der ungleichförmigen Drehbewegung wurde in den meisten Fällen zwischen den Propellersignalen gefunden. Es begann somit, gleichphasig und signifikant zu werden, Δ ψ = -60° und Δ ϕ = -120° bzw. gegenphasig, Δ ψ = -150°. Die restlichen Zusatzsignale (untereinander in einem Abstand von ca. 60° entfernt) blieben, soweit erkennbar, unsignifikant.

### Bezugszeichenliste

- 1: Pfeil - Drehgeschwindigkeitsmaximum
- 2: Propellerwelle
- 3: Propellerblatt
- 4: Drehrichtung

- α: Propellerblatt-Drehwinkel
- Δ ψ: Versatzwinkel des Propellers gegenüber der Grundstellung
- B: Beobachtungsort
- A: Auspuffsignal
- P: Propellersignal
- Z: Zusatzsignal

## Patentansprüche

1. Anordnung zur Minderung des Überfluggeräusches von Flugzeugen mit mit ungleichförmiger Drehgeschwindigkeit angetriebenem Propeller und daraus resultierendem Zusatzschallabstrahlmuster,
**dadurch gekennzeichnet,**
**daß** der Propeller derart auf der Motorwelle angeordnet ist, daß im wesentlichen die Maxima des Zusatzschallabstrahlmusters außerhalb von Drehwinkelbereichen liegen, in denen Maxima des nach unten gerichteten Propellerschallsignals auftreten.

2. Anordnung nach Anspruch 1,
**dadurch gekennzeichnet,**
**daß** der Drehwinkelbereich +/- 20° der jeweiligen Propellerblattstellung maximaler Schallabstrahlung umfaßt.

3. Verfahren zur Minderung des Überfluggeräusches von Flugzeugen mit mit ungleichförmiger Drehgeschwindigkeit angetriebenem Propeller,
**gekennzeichnet durch**
Erfassen der Beschleunigungswerte der Propellerdrehbewegung in Abhängigkeit des Drehwinkels der Motorwelle,
Bestimmung der Propellerdrehwinkelbereiche, in denen Maxima des nach unten gerichteten Propellerschallsignals auftreten,
Optimierung des Versatzwinkels zwischen Propeller und Motorwelle derart, daß die hohen, positiven oder negativen Beschleunigungswerte außerhalb der bestimmten Propellerdrehwinkelbereiche liegen.

4. Verfahren nach Anspruch 3,
**gekennzeichnet durch**
eine Optimierung des Versatzwinkels zwischen Propeller und Motorwelle derart, daß die Spitzenwerte des Zusatzschallabstrahlmusters in Gegenphase zu den Maxima des nach unten gerichteten Propellerschallsignals liegen.

5. Verfahren nach Anspruch 3 oder 4,
**dadurch gekennzeichnet,**
**daß** die Optimierung rechnerisch erfolgt und der Versatzwinkel zwischen Propeller und Motorwelle auf den berechneten Versatzwinkel eingestellt wird.

6. Verfahren nach Anspruch 3 oder 4,
**dadurch gekennzeichnet,**
**daß** die Optimierung experimentell erfolgt und der Versatzwinkel zwischen Propeller und Motorwelle auf den gemessenen Versatzwinkel eingestellt wird.

7. Verfahren nach einem der Ansprüche 3 bis 6,
**dadurch gekennzeichnet,**
**daß** die Einstellung des Versatzwinkels durch Vomehmen von optimiert angeordneten Bohrungen im Flansch zwischen Motorwelle und Propeller erfolgt.

8. Verfahren nach Anspruch 7,
**dadurch gekennzeichnet,**
**daß** ein Zusatzflansch vorgesehen wird, mit dem nicht optimiert angeordnete Bohrungen im Flansch bei bereits vorhandenen Flugzeugen angepaßt werden.
